# EUROPEAN PATENT SPECIFICATION

(11) **EP 2 148 425 B1**
(45) Date of publication and mention of the grant of the patent: **09.02.2011**
(21) Application number: 09009636.3
(22) Date of filing: 24.07.2009
(51) Int. Cl.: H02P 6/10, H02P 6/12, H02P 6/14, H02P 6/16, H02P 6/22

(54) **Single-phase brushless DC motor drive circuit**
Steuerungsschaltung für einen einphasigen bürstenlosen Gleichstrommotor
Circuit de commande pour un moteur monophasé à courant continu sans balais

(30) Priority: 25.07.2008 JP 2008192652
(43) Date of publication of application: 27.01.2010
(73) Proprietor: Panasonic Electric Works Co., Ltd., Kadoma-shi Osaka (JP)
(72) Inventor: Ueda, Hidetoshi, Kadoma-shi Osaka (JP)
(74) Representative: Samson & Partner

(56) References cited:
- EP-A- 0 982 836
- GB-A- 2 149 226
- TW-B- 221 048
- US-A1- 2004 104 696
- US-B1- 6 274 992

## Description

### Field of the Invention

The present invention relates to a drive circuit for a reversible single-phase brushless DC motor.

### Background of the Invention

A drive circuit for a single-phase brushless DC motor includes a sensor for detecting magnetic pole positions of a rotor and a motor driving integrated circuit for controlling a switching circuit based on the magnetic pole positions detected by the sensor. In case where an H-bridge is used as the switching circuit, the diagonally positioned switching devices are alternately driven to feed bidirectional currents to a motor coil.

As a method for rotating the single-phase brushless DC motor in forward and reverse directions, there is known a method in which the output signal of Hall sensor for detecting magnetic pole positions is inputted to a motor-driving integrated circuit through a circuit capable of inverting and non-inverting the output signal (see, e.g., Japanese Patent Laid-open Application No. 2005-261140).

With the prior art configuration mentioned above, however, it is difficult to generate start-up torque when the motor is started in a forward or reverse direction. Another problem resides in that it is necessary to decide the start-up direction.

US 6,274,992 B1 relates to a braking method for a single-phase motor and, in particular, to a braking method using a three-phase motor driving IC to drive a single-phase DC brushless motor.

GB 2 149 226 A discloses a collectorless D.C. motor with a permanent-magnet rotor magnet arrangement having at least two pole pairs and a star-connected three-conductor stator winding. The winding's conductors are arranged non-overlapping in slots of a slotted stator. Their currents are controlled via at least three semiconductor elements by at least three magnetic-field-sensitive position sensors, the latter in turn being controlled by the rotor magnet arrangement.

### Summary of the Invention

While the invention is defined in the independent claim 1, further aspects of the invention are set forth in the dependent claims, the drawings and the following description.

In view of the above, the present invention provides a single-phase brushless DC motor drive circuit capable of performing a start-up operation in a reliable manner when rotating a single-phase brushless motor in a forward direction and in a reverse direction.

In accordance with an embodiment of the invention, there is provided a motor drive circuit for driving a single-phase brushless DC motor includes a rotatably supported magnet rotor having magnetic poles, a stator core provided with slots and teeth, the teeth being arranged to face the magnet rotor, and a motor coil held in the slots, including: a plurality of magnetic pole position detectors for outputting detection signals indicative of magnetic pole positions of the magnet rotor; a rotation direction instruction circuit for issuing an instruct of a rotation direction of the magnet rotor; a selector circuit for, based on the instruction from the rotation direction instruction circuit, selectively outputting the detection signals of the magnetic pole position detectors; a switching circuit for driving the motor coil; and a control circuit for, based on the selectively outputted detection signals from the selector circuit, controlling the switching circuit to thereby control a direction and a magnitude of current flowing through the motor coil.

The magnetic pole position detectors may include a first magnetic pole position detector arranged at a medial position between the teeth within a predetermined range around an advance angle of about zero and a second magnetic pole position detector arranged to have a predetermined advance angle relative to the first magnetic pole position detector in a forward rotation direction of the magnet rotor.

At a forward rotation start-up time when the rotation direction instruction circuit instructs forward rotation, the selector circuit may select and output a detection signal of the second magnetic pole position detector; and the control circuit may cause the magnet rotor to start up by controlling the switching circuit in response to the detection signal outputted from the selector circuit such that an electric current flows through the motor coil in such a direction as to allow the teeth to exert a repulsive force against facing magnetic poles of the magnet rotor.

At a reverse rotation start-up time when the rotation direction instruction circuit instructs reverse rotation, the selector circuit may select and output a detection signal of the first magnetic pole position detector, and the control circuit may cause the magnet rotor to start up by controlling the switching circuit in response to the detection signal of the first magnetic pole position detector outputted from the selector circuit such that an electric current flows through the motor coil in such a direction as to allow the teeth to exert an attractive force against the facing magnetic pole of the magnet rotor.

The single-phase DC motor drive circuit may include a timer for outputting a signal after a specified time period has lapsed after the motor starts up, wherein the magnetic pole position detectors further include a third magnetic pole position detector arranged to have an advance angle relative to the first magnetic pole position detector in a reverse rotation direction of the magnet rotor, wherein the selector circuit selects one of the plurality of magnetic pole position detectors in response to the instruction issued from the rotation direction instruction circuit and the signal from the timer, and the selector circuit selects and outputs detection signals of the third magnetic pole position detector after the specified time period has lapsed from the reverse rotation start-up time of the magnet rotor.

The single-phase brushless DC motor drive circuit may further include a sensor selection circuit for enabling the selector circuit to select one of the magnetic pole position detectors and an output changing circuit for changing the motor output power, at a time when the rotation direction instruction circuit instructs the reverse rotation, the selector circuit selects detection signals issued from the first or the third magnetic pole position detector depending on the motor output power.

The magnetic pole position detectors may include a fourth magnetic pole position detector arranged to have an advance angle relative to the second magnetic pole position detector in a forward rotation direction of the magnet rotor, and wherein, at a time when the rotation direction instruction circuit instructs the forward rotation, the selector circuit selects detection signals issued from the second or the fourth magnetic pole position detector depending on the motor output power.

Each of the teeth may have a generally T-shape asymmetrical in a left-and-right direction when seen in an axial direction of the motor, and wherein, during stoppage of the magnet rotor, magnetic centers of the magnetic poles of the magnet rotor are shifted to forward rotation side beyond the centers of the teeth.

The present invention offers an advantageous effect in that it can provide a single-phase brushless DC motor drive circuit simple in configuration and capable of performing forward and reverse start-up operations in a reliable manner.

### Brief Description of the Drawings

The objects and features of the present invention will become apparent from the following description of embodiments, given in conjunction with the accompanying drawings, in which:
Fig. 1 is a schematic section view illustrating the structure of a single-phase brushless DC motor to which the present invention applies and the arrangement of magnetic sensors;
Fig. 2 is a block diagram showing a single-phase brushless DC motor drive circuit in accordance with first to third embodiments of the present invention;
Fig. 3 is a circuit diagram showing the major parts of the drive circuit in accordance with the first to third embodiments of the present invention;
Fig. 4 is a schematic section view illustrating the relative positional relationship between teeth, a magnet rotor and magnetic sensors of the single-phase brushless DC motor when the motor is rotated in the forward direction by the drive circuit of the first embodiment;
Fig. 5 is a schematic section view illustrating the relative positional relationship between the teeth, the magnet rotor and the magnetic sensors of the single-phase brushless DC motor when the motor is rotated in the reverse direction by the drive circuit of the first embodiment;
Fig. 6 is a schematic section view illustrating the relative positional relationship between the teeth, the magnet rotor and the magnetic sensors of the single-phase brushless DC motor when the motor is rotated in the reverse direction by the drive circuit of the second embodiment; and
Fig. 7 is a schematic section view illustrating the relative positional relationship between the teeth, the magnet rotor and the magnetic sensors of the single-phase brushless DC motor when the motor is rotated in the forward direction by the drive circuit of the third embodiment.

### Detailed Description of the Preferred Embodiments

Hereinafter, embodiments of the present invention will be described in detail with reference to the accompanying drawings which form a part hereof.

### First Embodiment

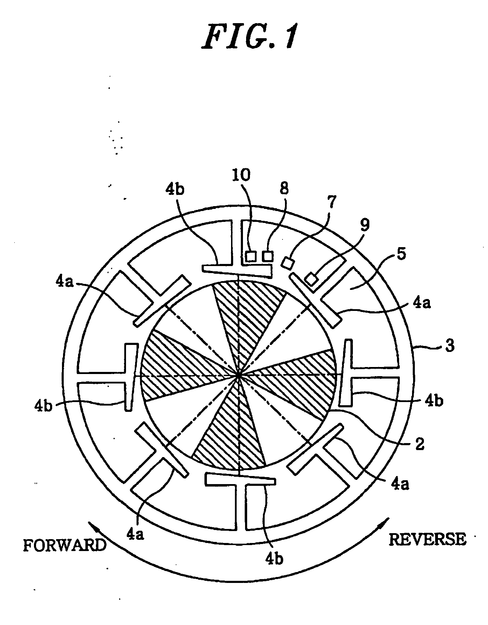

Fig. 1 is a schematic cross section view illustrating a structure of a single-phase brushless DC motor and an arrangement of magnetic sensors (or magnetic pole position detectors) to which a motor driving circuit is accordance with an embodiment of the present invention may be applied. The motor structure and the sensor arrangement is not limited to the depicted example but can be varied appropriately.

Referring to Fig. 1, the single-phase brushless DC motor 1 includes a rotatably supported magnet rotor 2 having a plurality of magnetic poles; a stator core 3 provided with a plurality of slots 5 and a plurality of teeth 4a and 4b, the teeth 4a and 4b being arranged to face the magnet rotor 2; and a motor coil 6 (not shown in Fig. 1) held in the slots 5. The motor coil 6 is wound on the teeth 4a and 4b in the opposite winding directions.

As shown in Fig. 1, magnetic pole position detectors for outputting detection signals indicative of magnetic pole positions of the magnet rotor 2, namely a magnetic sensor 7 (a first magnetic pole position detector), a magnetic sensor 8 (a second magnetic pole position detector), a magnetic sensor 9 (a third magnetic pole position detector) and a magnetic sensor 10 (a fourth magnetic pole position detector), are installed within the magnetic field range near the magnet rotor 2.

At the medial position between a tooth 4a and its neighboring tooth 4b, the magnetic sensor 7 is arranged within a specific range around an advance angle of zero. The magnetic sensor 8 is arranged to have a preset advance angle relative to the position of the magnetic sensor 7 in the forward rotation direction of the motor. The magnetic sensor 9 is arranged to have a predetermined advance angle relative to the position of the magnetic sensor 7 in the reverse rotation direction of the motor. The magnetic sensor 10 is arranged to have another predetermined advance angle relative to the position of the magnetic sensor 8 in the forward rotation direction of the motor.

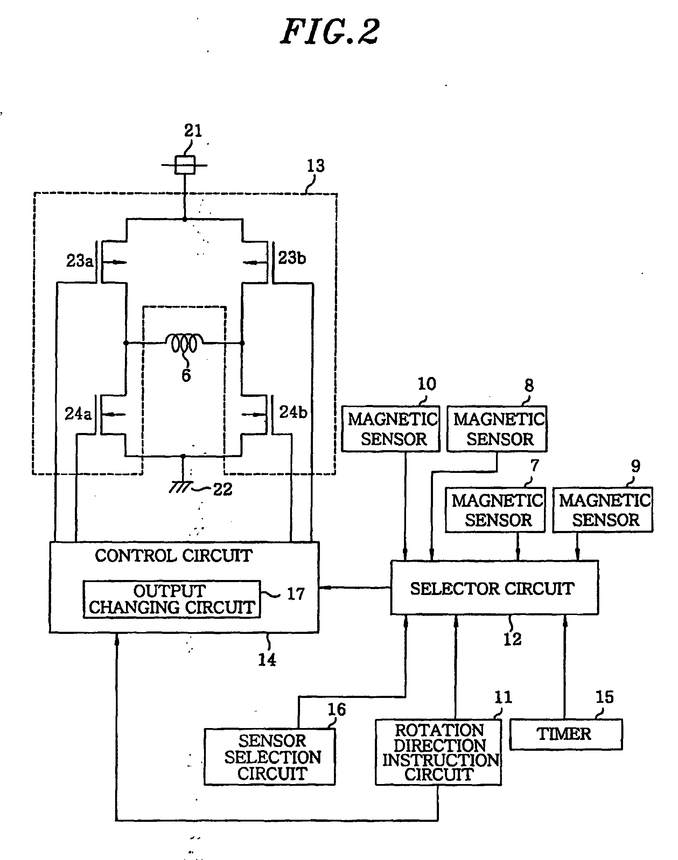

Fig. 2 is a block diagram showing a drive circuit for driving the single-phase brushless DC motor 1. As shown in Fig. 2, the drive circuit includes a plurality of magnetic sensors 7, 8, 9 and 10 for outputting detection signals indicative of the magnetic pole positions of the magnet rotor 2; a rotation direction instruction circuit 11 for instructing the rotation direction of the magnet rotor 2; a selector circuit 12 for selectively outputting the detection signals of the magnetic sensors 7 through 10 based on the instructions of the rotation direction instruction circuit 11; a switching circuit 13 for driving the motor coil 6; and a control circuit 14 for controlling a direction and a magnitude of current flowing through the motor coil 6 by controlling the switching circuit 13 based on the position detection signal selected by the selector circuit 12. The rotation direction instruction circuit 11 provides, e.g., rotation direction instruction signal to the selector circuit 12 and the control circuit 14.

The drive circuit further includes a timer 15 for outputting a signal after a specified time period has lapsed from the motor start-up time, a sensor selection circuit 16 for enabling the selector circuit 12 to select one of the magnetic sensors 7 to 10, and an output changing circuit 17 for changing the motor output power.

In the first embodiment, however, the magnetic sensors 9 and 10, the timer 15, the sensor selection circuit 16sensor selection circuit 16 and the output changing circuit 17 may be omitted.

In the switching circuit 13, an H-bridge circuit is formed of switching elements, i.e., P-channel FETs 23a and 23b and N-channel FETs 24a and 24b. The motor coil 6 is connected between the junction point of the FETs 23a and 24a and the junction point of the FETs 23b and 24b.

In the switching circuit 13, the source terminals of the FETs 23a and 23b are connected to the positive electric potential 21 of a motor-driving power source. The drain terminal of the FET 24a is connected to the drain terminal of the FET 23a, while the drain terminal of the FET 24b is connected to the drain terminal of the FET 23b. The source terminals of the FETs 24a and 24b are connected to the negative electric potential 22 (hereinafter referred to as a ground potential 22) of the motor-driving power source. The gate terminals of the FETs 23a, 23b, 24a and 24b are connected to the control circuit 14. Gate signals for controlling the on-and-off operations of the FETs are respectively supplied from the control circuit 14 to the FETs.

At the start-up time when the rotation direction instruction circuit 11 instructs the forward rotation, the selector circuit 12 selects and outputs the magnetic pole position detection signal of the magnetic sensor 8. Responsive to the output of the selector circuit 12, the control circuit 14 causes the magnet rotor 2 to start up by controlling the switching circuit 13 so that an electric current is fed to the motor coil 6 in such a direction as to allow the teeth 4a and 4b to exert repulsive forces on the facing magnetic poles of the magnet rotor 2.

At the start-up time when the rotation direction instruction circuit 11 instructs the reverse rotation, the selector circuit 12 selects and outputs the magnetic pole position detection signal of the magnetic sensor 7. Responsive to the output of the selector circuit 12, the control circuit 14 causes the magnet rotor 2 to start up by controlling the switching circuit 13 so that an electric current is fed to the motor coil 6 in such a direction as to allow the teeth 4a and 4b to exert attractive forces on the facing magnetic poles of the magnet rotor 2.

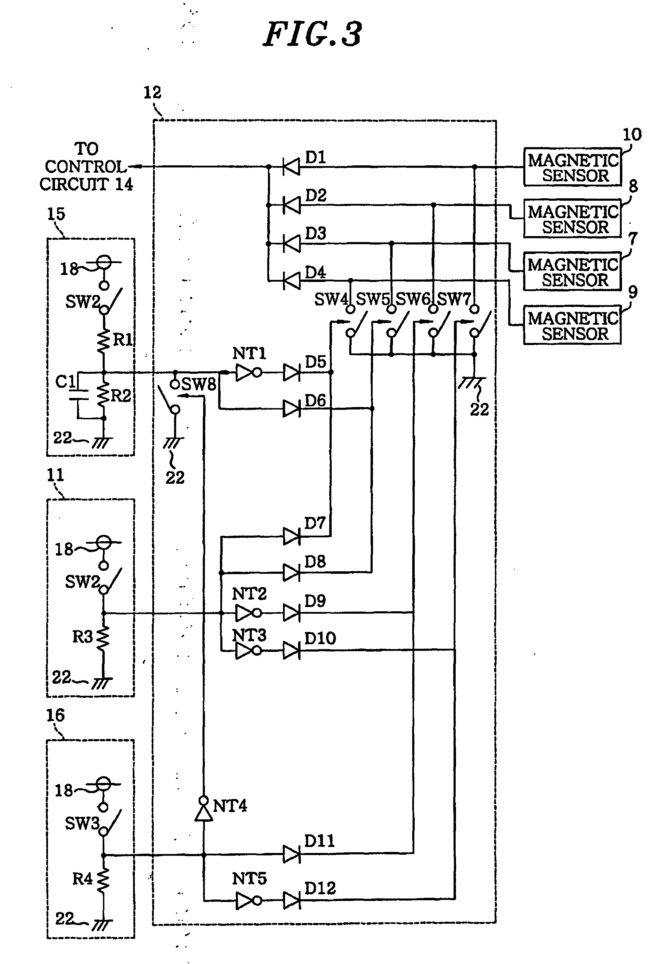

Fig. 3 is a circuit diagram illustrating the details of the rotation direction instruction circuit 11, the selector circuit 12, the timer 15 and the sensor selection circuit 16 shown in Fig. 2.

The selector circuit 12 includes diodes D1, D2, D3 and D4 whose anodes are connected to the magnetic sensors 10, 8, 7 and 9, respectively. The cathodes of the diodes D1, D2, D3 and D4 are connected to one another in a wired-off pattern so as to generate a single output signal which in turn is fed to the control circuit 14 as a post-selection magnetic sensor output. Electronically controlled switches SW7, SW6, SW5 and SW4 are connected at their one ends to the anodes of the diodes D1, D2, D3 and D4 and are grounded at the other ends thereof.

When turned on, the switches SW7, SW6, SW5 and SW4 serve to ground the outputs of the magnetic sensors 10, 8, 7 and 9 connected to one ends thereof, thus controlling the outputs not to be fed to the control circuit 14. Only one of the switches SW7, SW6, SW5 and SW4 is selected to be turned off so that the output of the magnetic sensor connected to one end of the selected single switch can be fed to the control circuit 14 through one of the diodes D1, D2, D3 and D4. The rotation direction instruction circuit 11, the timer 15 and the sensor selection circuit 16 generate control signals for turning on or off the switches SW4 through SW7, thereby allowing the selector circuit 12 to select one of the magnetic sensors 7 through 10.

The rotation direction instruction circuit 11 includes a switch SW2 which can be manually or electronically operated to instruct a desired rotation direction. The switch SW2 can be turned on to instruct the forward rotation as the rotation direction and turned off to instruct the reverse rotation as the rotation direction. The switch SW2 is connected at one end thereof to a control power source 18 and grounded at the other end thereof through a resistor R3. Therefore, the junction point between the other end of the switch SW2 and the resistor R3 generates a forward rotation instruction signal, which is kept in a positive electric potential when the switch SW2 is turned on, but generates a reverse rotation instruction signal, which is kept in a ground potential when the switch SW2 is turned off. The forward/reverse rotation instruction signal is supplied to the anodes of diodes D7 and D8. Signals for controlling the switches SW4 and SW5 are respectively generated from the cathodes of the diodes D7 and D8.

The forward/reverse rotation signal generated at the junction point between the other end of the switch SW2 and the resistor R3 is also supplied to NOT circuits NT2 and NT3. The potential of the forward/reverse rotation signal is inverted by the NOT circuits NT2 and NT3 and are supplied to the anodes of diodes D9 and D10. Signals for controlling the switches SW6 and SW7 are respectively generated from the cathodes of the diodes D9 and D10.

Therefore, the outputs of the magnetic sensors 7 and 9 are grounded when the switch SW2 is turned on, and the outputs of the magnetic sensors 10 and 8 are grounded when the switch SW2 is turned off.

The sensor selection circuit 16 includes a switch SW3, which is manually or electronically operated. The switch SW3 is connected at one end thereof to a voltage of the control power source 18 and grounded at the other end thereof through a resistor R4. Therefore, the junction point between the other end of the switch SW3 and the resistor R4 generates a sensor selection signal which is kept in a positive electric potential when the switch SW3 is turned on but kept in a ground potential when the switch SW3 is turned off. The sensor selection signal is supplied to the anodes of NOT circuits NT4 and NT5 and the anode of a diode D11. The output of the NOT circuit NT4 is used as a signal for controlling a switch SW8.

A signal for controlling the switch 6 is generated from the cathode of the diode D11. The output of the NOT circuit NT5 is connected to the anode of a diode D12. A signal for controlling the switch SW7 is generated from the cathode of the diode D12.

The timer 15 includes a switch SW1, a resistor R1, a resistor R2 and a capacitor C1. The switch SW1 is manually or electronically operated to allow the timer 15 to start counting the lapsed time. The switch SW1 is connected at one end thereof to the voltage of the control power source 18 and at the other end thereof to one end of the resistor R1. The other end of the resistor R1 is connected to one end of the resistor R2 and one end of the capacitor C1. The other end of the resistor R2 and the other end of the capacitor C1 is grounded. The other end of the resistor R1 is also connected to one end of the switch SW8, while the other end of the switch SW8 is grounded.

The control signal of the switch SW8 is the output of the NOT circuit NT4 (the inverted sensor selection signal) described in connection with the sensor selection circuit 16. In case where the sensor selection circuit 16 does not instruct the motor 1 to generate output power, the switch SW8 is on at all times. Therefore, the timer 15 stays inoperative, while the input of the NOT circuit NT1 and the anode of the diode D6 are kept at the ground potential. The output of the NOT circuit NT1 is fed, as a control signal, to the switch SW4 through a diode D5. Thus, the switch SW4 is turned on and the output of the magnetic sensor 9 is neglected.

If the switch SW1 is turned on while the sensor selection circuit 16 issues the sensor selection signal of the positive potential to turn off the switch SW8, the capacitor C1 begins to be charged through the resistor R1, thereby increasing the voltage of the capacitor C1. After a specified time period proportional to the time constant determined by the resistors R1 and R2 and the capacitor C1 has lapsed, the voltage of the capacitor C1 exceeds the threshold voltage value of the NOT circuit NT1 to become a time lapse signal. If the time lapse signal is outputted to the diode D6, the switch SW5 is turned on and the output of the magnetic sensor 7 is neglected thereafter.

Use of the timer 15 is effective in the event that the rotation direction instruction circuit 11 instructs the reverse rotation to thereby turn off the switches SW4 and SW5 and turn on the switches SW6 and SW7.

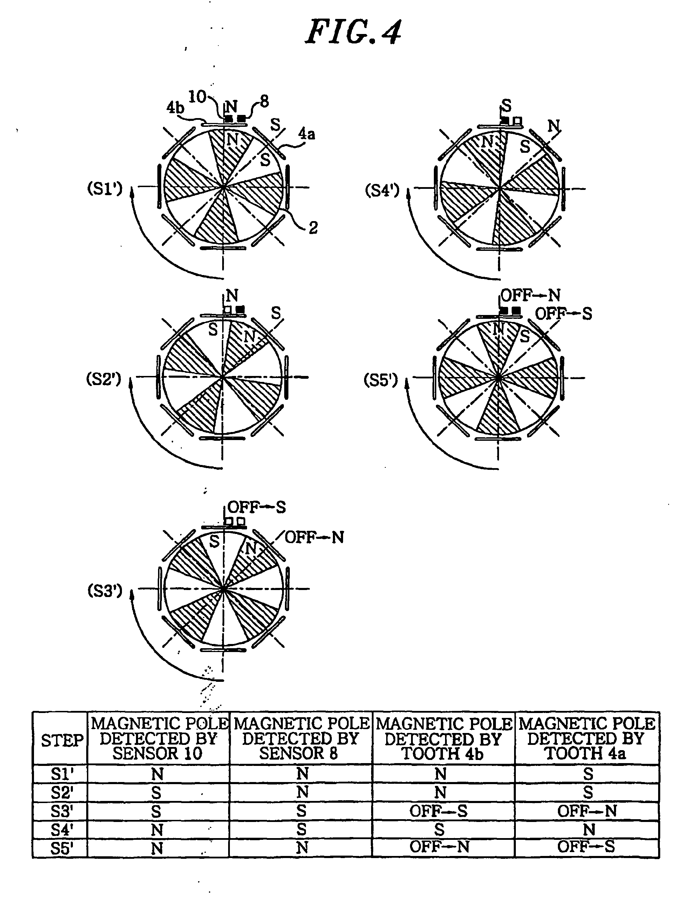

Referring next to Fig. 4, description will be made on the forward rotation operation of the single-phase brushless DC motor 1 in accordance with the present embodiment.

At the forward rotation start-up time of the motor 1, the positional relationship between the teeth 4a and 4b of the stator and the magnetic poles of the magnet rotor 2 is kept as shown in step S1' in Fig. 4. Each of the teeth 4a and 4b has a varying thickness or shape such as a cutout or the like so that the magnetic resistance can be asymmetrical in the left-and-right direction. Before being supplied with electricity, the motor 1 is stopped in a state that the magnetic centers of the magnet rotor 2 are shifted to the forward rotation side (to the clockwise side in Fig. 4) beyond the centers of the teeth 4a and 4b.

If the switch SW2 of the rotation direction instruction circuit 11 is turned on, the voltage of the control power-source 18 is applied to the switches SW4 and SW5 through the diodes D7 and D8 to turn on the switches SW4 and SW5. Thus, the output voltages of the magnetic sensors 9 and 7 have the same electric potential as the ground potential 22.

In case where the switch SW3 of the sensor selection circuit 16 is turned off, the voltages developed at the both ends of the resistor R4 have the same electric potential as the ground potential 22. The positive voltage inverted by the NOT circuit NT5 is applied to the switch SW7 through the diode D12 so that the switch SW7 is turned on. Thus, the output voltage of the magnetic sensor 10 has the same electric potential as the ground potential 22. As a result, only the output of the magnetic sensor 8 is fed to the control circuit 14 through the diode D2.

At step S1', the magnetic sensor 8 detects that magnetic pole of the magnet rotor 2 it faces is an N-pole. Responsive to a signal generated from the magnetic sensor 8 and the forward rotation instruction signal from the rotation direction instruction circuit 11, the control circuit 14 turns on, e.g., the FETs 23a and 24b to magnetize the teeth 4a and 4b so that an electric current can flow through the motor coil 6 in such a direction as to make the teeth 4b the N-pole and the teeth 4a the S-pole. Then, a repulsive force is generated between the teeth 4a and 4b and the magnet rotor 2 to apply torque to the magnet rotor 2, as a result of which the magnet rotor 2 begins to rotate in the forward direction (namely, in the clockwise direction in Fig. 4).

At the subsequent step S2', the magnetic sensor 8 detects that the facing magnetic pole of the magnet rotor 2 is an N-pole. Responsive to a signal generated from the magnetic sensor 8, the control circuit 14 turns on the FETs 23a and 24b to magnetize the teeth 4a and 4b so that an electric current can flow through the motor coil 6 in such a direction as to make the teeth 4b the N-pole and the teeth 4a the S-pole. Then, an attractive force is generated between the teeth 4a and 4b and the magnet rotor 2 to apply torque to the magnet rotor 2, as a result of which the magnet rotor 2 continues to rotate in the forward direction (namely, in the clockwise direction in Fig. 4).

At the next step S3', the magnetic sensor 8 detects that the facing magnetic pole of the magnet rotor 2 has been changed to an S-pole. Responsive to a signal generated from the magnetic sensor 8, the control circuit 14 turns off the FETs 23a and 24b and ceases to supply an electric current to the motor coil 6, thereby stopping magnetizing the teeth 4a and 4b. Nevertheless, the magnet rotor 2 continues to make forward rotation by the inertial force thereof and the attractive force generated between the teeth 4a and 4b and the magnet rotor 2 under the influence of reluctance. A circuit delay between the timing of applying the turn-on voltage to the FETs 23a, 24b, 23b and 24a and their completely turn-on timing is predetermined. After the FETs 23a and 24b are turned-off, the control circuit 14 applies the turn-on voltage to the gates of the FETs 23b and 24a such that at the time when the magnetic centers of the magnet rotor 2 coincide with the centers of the teeth 4a and 4b, the FETs 23b and 24a are fully turned on to magnetize the teeth 4a and 4b so that an electric current can flow through the motor coil 6 in such a direction as to make the teeth 4b the S-pole and the teeth 4a the N-pole. Then, a repulsive force is generated between the teeth 4a and 4b and the magnet rotor 2 to apply torque to the magnet rotor 2, as a result of which the magnet rotor 2 continues to rotate in the forward direction (namely, in the clockwise direction in Fig. 4).

At the subsequent step S4', the magnetic sensor 8 detects that the facing magnetic pole of the magnet rotor 2 is an S-pole. Responsive to a signal generated from the magnetic sensor 8, the control circuit 14 turns on the FETs 23b and 24a to magnetize the teeth 4a and 4b so that an electric current can flow through the motor coil 6 in such a direction as to make the teeth 4b the S-pole and the teeth 4a the N-pole. Then, an attractive force is generated between the teeth 4a and 4b and the magnet rotor 2 to apply torque to the magnet rotor 2, as a result of which the magnet rotor 2 continues to rotate in the forward direction (namely, in the clockwise direction in Fig. 4).

At the next step S5', the magnetic sensor 8 detects that the facing magnetic pole of the magnet rotor 2 has been changed to an-N-pole. Responsive to a signal generated from the magnetic sensor 8, the control circuit 14 turns off the FETs 23b and 24a and ceases to supply an electric current to the motor coil 6, thereby stopping magnetizing the teeth 4a and 4b. Nevertheless, the magnet rotor 2 continues to make forward rotation by the inertial force thereof and the attractive force generated between the teeth 4a and 4b and the magnet rotor 2 under the influence of reluctance. At the time when the magnetic centers of the magnet rotor 2 coincide with the centers of the teeth 4a and 4b, the control circuit 14 turns on the FETs 23a and 24b to magnetizing the teeth 4a and 4b so that an electric current can flow through the motor coil 6 in such a direction as to make the teeth 4b the N-pole and the teeth 4a the S-pole. Then, a repulsive force is generated between the teeth 4a and 4b and the magnet rotor 2 to apply torque to the magnet rotor 2, as a result of which the magnet rotor 2 continues to rotate in the forward direction (namely, in the clockwise direction in Fig. 4). Thereafter, steps S2' through S5' are repeated to allow the magnet rotor 2 to continuously make forward rotation.

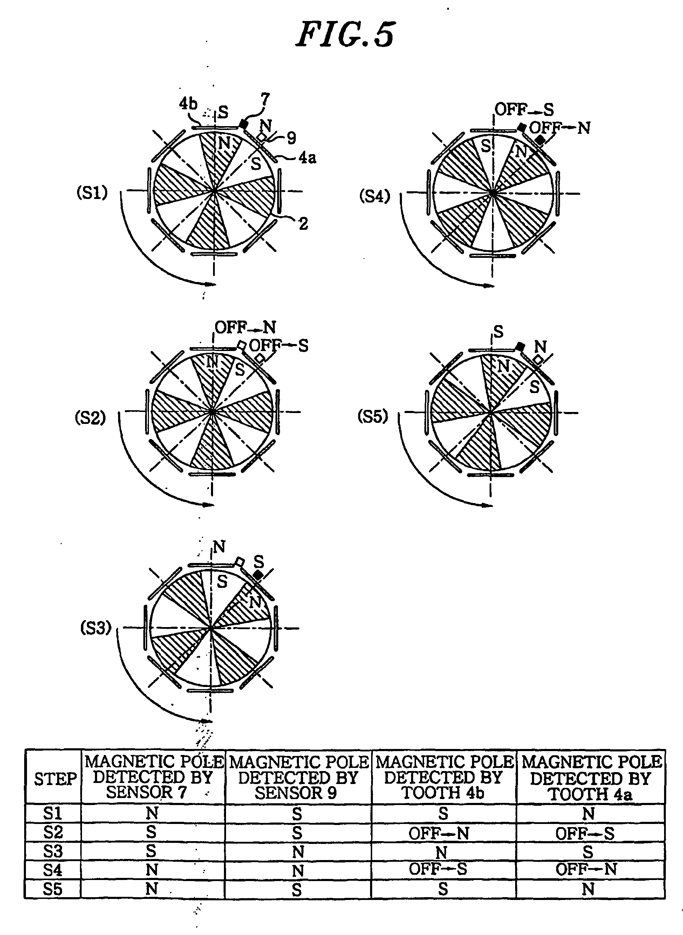

Referring next to Fig. 5, description will be made on the reverse operation of the single-phase brushless DC motor 1 in accordance with the present embodiment.

At the reverse rotation start-up time of the motor 1, the positional relationship between the teeth 4a and 4b of the stator and the magnetic poles of the magnet rotor 2 is kept as shown in step S1 in Fig. 5. Each of the teeth 4a and 4b has a varying thickness or shape such as a cutout or the like so that the magnetic resistance can be asymmetrical in the left-and-right direction. Before being supplied with electricity, the motor 1 is stopped in a state that the magnetic centers of the magnet rotor 2 are shifted to the forward rotation side (to the clockwise side in Fig. 5) beyond the centers of the teeth 4a and 4b.

If the switch SW2 of the rotation direction instruction circuit 11 is turned off, the voltage developed at the opposite ends of the resistor R3 has the same electric potential as the ground potential 22. The positive voltage inverted by the NOT circuits NT2 and NT3 is applied to the switches SW6 and SW7 through the diodes D9 and D10 so that the switches SW6 and SW7 can be turned on. Thus, the output voltages of the magnetic sensors 8 and 10 have the same electric potential as the ground potential 22. When the switch SW3 of the sensor selection circuit 16 is turned off, the voltages developed at the both ends of the resistor R4 have the same electric potential as the ground potential 22. The positive voltage inverted by the NOT circuit NT4 is applied to the switch SW8 so that the switch SW8 is turned on. Thus, the voltages developed at the both ends of the resistor R2 have the same electric potential as the ground potential 22. The positive voltage inverted by the NOT circuit NT1 is applied to the switch SW4 through the diode D5 so that the switch SW4 is turned on. Thus, the output voltage of the magnetic sensor 9 has the same electric potential as the ground potential 22. As a result, only the output of the magnetic sensor 7 is fed to the control circuit 14 through the diode D3.

At step S1, the magnetic sensor 7 detects that magnetic pole of the magnet rotor 2 it faces is an N-pole. Responsive to a signal generated from the magnetic sensor 7 and the reverse rotation instruction signal from the rotation direction instruction circuit 11, the control circuit 14 turns on, e.g., the FETs 23b and 24a to magnetize the teeth 4a and 4b so that an electric current can flow through the motor coil 6 in such a direction as to make the teeth 4b the S-pole and the teeth 4a the N-pole. Then, an attractive force is generated between the teeth 4a and 4b and the magnet rotor 2 to apply torque to the magnet rotor 2, as a result of which the magnet rotor 2 begins to rotate in the reverse direction (namely, in the counterclockwise direction in Fig. 5).

At the subsequent step S2, the magnetic sensor 7 detects that the facing magnetic pole of the magnet rotor 2 has been changed to an S-pole. Responsive to a signal generated from the magnetic sensor 7, the control circuit 14 turns off the FETs 23b and 24a and ceases to supply an electric current to the motor coil 6, thereby stopping magnetizing the teeth 4a and 4b. Nevertheless, the magnet rotor 2 continues to make reverse rotation by the inertial force thereof and the attractive force generated between the teeth 4a and 4b and the magnet rotor 2 under the influence of reluctance. At the time when the magnetic centers of the magnet rotor 2 coincide with the centers of the teeth 4a and 4b, the control circuit 14 turns on the FETs 23a and 24b so that an electric current can flow through the motor coil 6 in such a direction as to make the teeth 4b the N-pole and the teeth 4a the S-pole, thereby magnetizing the teeth 4a and 4b. Then, a repulsive force is generated between the teeth 4a and 4b and the magnet rotor 2 to apply torque to the magnet rotor 2, as a result of which the magnet rotor 2 continues to rotate in the reverse direction (namely, in the counterclockwise direction in Fig. 5).

At the next step S3, the magnetic sensor 7 detects that the facing magnetic pole of the magnet rotor 2 is an S-pole. Responsive to a signal generated from the magnetic sensor 7, the control circuit 14 turns on the FETs 23a and 24b to magnetize the teeth 4a and 4b so that an electric current can flow through the motor coil 6 in such a direction as to make the teeth 4b the N-pole and the teeth 4a the S-pole. Then, an attractive force is generated between the teeth 4a and 4b and the magnet rotor 2 to apply torque to the magnet rotor 2, as a result of which the magnet rotor 2 continues to rotate in the reverse direction (namely, in the counterclockwise direction in Fig. 5).

At the next step S4, the magnetic sensor 7 detects that the facing magnetic pole of the magnet rotor 2 has been changed to an N-pole. Responsive to a signal generated from the magnetic sensor 7, the control circuit 14 turns off the FETs 23a and 24b and ceases to supply an electric current to the motor coil 6, thereby stopping magnetizing the teeth 4a and 4b. Nevertheless, the magnet rotor 2 continues to make reverse rotation by the inertial force thereof and the attractive force generated between the teeth 4a and 4b and the magnet rotor 2 under the influence of reluctance. At the time when the magnetic centers of the magnet rotor 2 coincide with the centers of the teeth 4a and 4b, the control circuit 14 turns on the FETs 23b and 24a to magnetize the teeth 4a and 4b so that an electric current can flow through the motor coil 6 in such a direction as to make the teeth 4b the S-pole and the teeth 4a the N-pole. Then, a repulsive force is generated between the teeth 4a and 4b and the magnet rotor 2 to apply torque to the magnet rotor 2, as a result of which the magnet rotor 2 continues to rotate in the reverse direction (namely, in the counterclockwise direction in Fig. 5).

At the next step S5, the magnetic sensor 7 detects that the facing magnetic pole of the magnet rotor 2 is an N-pole. Responsive to a signal generated from the magnetic sensor 7, the control circuit 14 turns on the FETs 23b and 24a to magnetize the teeth 4a and 4b so that an electric current can flow through the motor coil 6 in such a direction as to make the teeth 4b the S-pole and the teeth 4a the N-pole. Then, an attractive force is generated between the teeth 4a and 4b and the magnet rotor 2 to apply torque to the magnet rotor 2, as a result of which the magnet rotor 2 continues to rotate in the reverse direction (namely, in the counterclockwise direction in Fig. 5). Thereafter, steps S2 through S5 are repeated to allow the magnet rotor 2 to continuously make reverse rotation.

With the first embodiment described above, it is possible to provide a single-phase brushless motor drive circuit simple in configuration and capable of performing forward and reverse start-up operations in a reliable manner.

### Second Embodiment

Next, description will be made on a drive circuit for driving a single-phase brushless DC motor 1 in accordance with a second embodiment. In describing the second embodiment, the component parts having the like configuration and operational effect as those of the first embodiment will be designated by like reference characters. The detailed description of the first embodiment made in that regard will be incorporated herein by reference.

The configuration of the second embodiment differs from that of the first embodiment in that the magnetic sensor 9 (the third magnetic pole position detector) and the timer 15 are essential in the second embodiment. Another difference lies in that the selector circuit 12 selects the magnetic sensors depending on the rotation direction instruction circuit 11 and the timer 15. The magnetic sensor 7 (or the first magnetic pole position detector) is selected at the reverse rotation start-up time and the magnetic sensor 9 is selected after a specified time period has lapsed from the start-up time.

Given the afore-mentioned differences, the operation of the single-phase brushless DC motor drive circuit will be described with reference to Figs. 1 through 3 and Fig. 6.

During the reverse rotation of the motor 1, the switch SW2 of the rotation direction instruction circuit 11 remains turned off and the voltage developed at the opposite ends of the resistor R3 has the same electric potential as the ground potential 22. The positive voltage inverted by the NOT circuits NT2 and NT3 is applied to the switches SW6 and SW7 through the diodes D9 and D10 to turn on the switches SW6 and SW7. Thus, the output voltage of the magnetic sensors 8 and 10 has the same electric potential as the ground potential 22. If the switch SW3 of the sensor selection circuit 16 is turned on, the voltage of the control power source 18 is inverted by the NOT circuit NT4 and then applied to the switch SW8, thereby turning off the switch SW8. Subsequently, if the switch SW1 of the timer 15 is turned on, the voltage of the control power source 18 is coupled to the capacitor C1 via the resistor R1. The capacitor C1 is charged with a specified time constant determined by the resistor R1, the resistor R2 and the capacitor C1. The term "specified time constant" denotes the time required until the rotation of the motor 1 becomes stable, which is equal to or greater than 50 msec and preferably 1 sec or more. The switch SW1 of the timer 15 may be configured to be turned on and off on unison with the on and off operation of the switch SW3 of the sensor selection circuit 16.

In case where the charged voltage value of the capacitor C1 is equal to or smaller than the threshold voltage value of the NOT circuit NT1, the positive voltage inverted by the NOT circuit NT1 is applied to the switch SW4 via the diode D5 to turn on the switch SW4. Thus, the output voltage of the magnetic sensor 9 has the same electric potential as the ground potential 22. As a result, only the output of the magnetic sensor 7 is fed to the control circuit 14 through the diode D3. The reverse rotation made at this time is performed by repeating steps S2 through S5 as shown in Fig. 5 and set forth earlier in connection with the first embodiment.

If the charged voltage value of the capacitor C1 charged with the specified time constant is greater than the threshold voltage value of the NOT circuit NT1, the output inverted by the NOT circuit NT1 has the same electric potential as the ground potential 22. Likewise, the output voltage of the diode D5 has the same electric potential as the ground potential 22. Thus, the switch SW4 is turned off so that the output of the magnetic sensor 9 can be fed to the control circuit 14 through the diode D4. Furthermore, the charged voltage value of the capacitor C1 is applied to the switch SW5 through the diode D6 to turn on the switch SW5. Thus, the output voltage of the magnetic sensor 7 has the same electric potential as the ground potential 22. As a result, only the output of the magnetic sensor 9 is fed to the control circuit 14 through the diode D4.

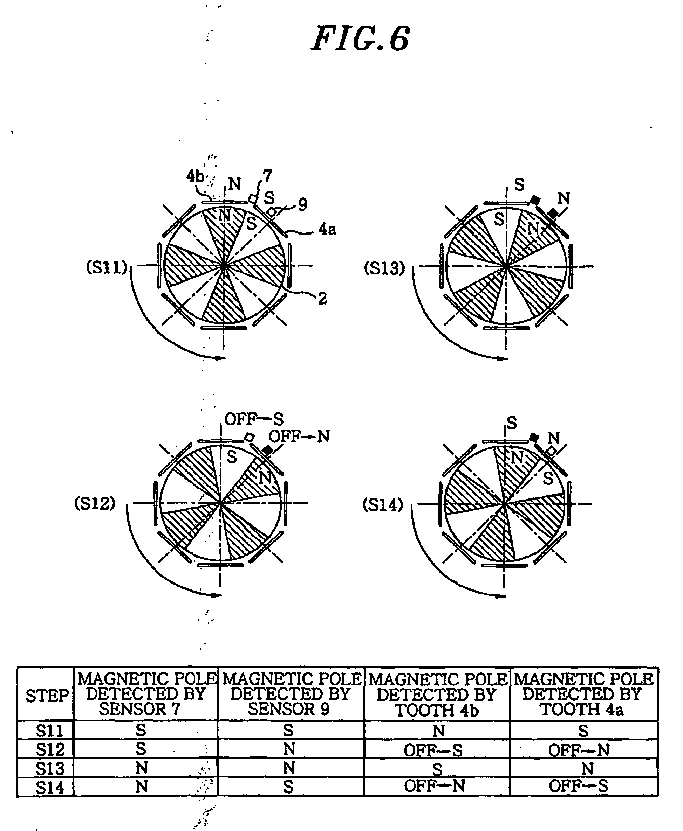

At step S11 illustrated in Fig. 6, the magnetic sensor 9 detects that the facing magnetic pole of the magnet rotor 2 is an S-pole. Responsive to a signal generated from the magnetic sensor 9 and the reverse rotation instruction signal from the rotation direction instruction circuit 11, the control circuit 14 turns on, e.g., the FETs 23a and 24b to magnetize the teeth 4a and 4b so that an electric current can flow through the motor coil 6 in such a direction as to make the teeth 4b the N-pole and the teeth 4a the S-pole. Then, an repulsive force is generated between the teeth 4a and 4b and the magnet rotor 2 to apply torque to the magnet rotor 2, as a result of which the magnet rotor 2 continues to rotate in the reverse direction (namely, in the counterclockwise direction in Fig. 6).

At the subsequent step S12, the magnetic sensor 7 detects that the facing magnetic pole of the magnet rotor 2 has been changed to an N-pole. Responsive to a signal generated from the magnetic sensor 9, the control circuit 14 turns off the FETs 23a and 24b and ceases to supply an electric current to the motor coil 6, thereby stopping magnetizing the teeth 4a and 4b. Nevertheless, the magnet rotor 2 continues to make reverse rotation by the inertial force thereof and the attractive force generated between the teeth 4a and 4b and the magnet rotor 2 under the influence of reluctance. At the time when the magnetic centers of the magnet rotor 2 coincide with the centers of the teeth 4a and 4b, the FETs 23b and 24a are fully turned on by the control circuit 14 to magnetize the teeth 4a and 4b so that an electric current can flow through the motor coil 6 in such a direction as to make the teeth 4b the S-pole and the teeth 4a the N-pole. Then, a repulsive force is generated between the teeth 4a and 4b and the magnet rotor 2 to apply torque to the magnet rotor 2, as a result of which the magnet rotor 2 continues to rotate in the reverse direction (namely, in the counterclockwise direction in Fig. 6).

At the next step S13, the magnetic sensor 9 detects that the facing magnetic pole of the magnet rotor 2 is an N-pole. Responsive to a signal generated from the magnetic sensor 9, the control circuit 14 turns on the FETs 23b and 24a to magnetize the teeth 4a and 4b so that an electric current can flow through the motor coil 6 in such a direction as to make the teeth 4b the S-pole and the teeth 4a the N-pole. Then, a repulsive force is generated between the teeth 4a and 4b and the magnet rotor 2 to apply torque to the magnet rotor 2, as a result of which the magnet rotor 2 continues to rotate in the reverse direction (namely, in the counterclockwise direction in Fig. 6).

At the next step S14, the magnetic sensor 9 detects that the facing magnetic pole of the magnet rotor 2 has been changed to an S-pole. Responsive to a signal generated from the magnetic sensor 9, the control circuit 14 turns off the FETs 23b and 24a and ceases to supply an electric current to the motor oil 6, thereby stopping magnetizing the teeth 4a and 4b. Nevertheless, the magnet rotor 2 continues to make reverse rotation by the inertial force thereof and the attractive force generated between the teeth 4a and 4b and the magnet rotor 2 under the influence of reluctance. At the time when the magnetic centers of the magnet rotor 2 coincide with the centers of the teeth 4a and 4b, the FETs 23b and 24a are fully turned on by the control circuit 14 to magnetize the teeth 4a and 4b so that an electric current can flow through the motor coil 6 in such a direction as to make the teeth 4b the N-pole and the teeth 4a the S-pole. Then, a repulsive force is generated between the teeth 4a and 4b and the magnet rotor 2 to apply torque to the magnet rotor 2, as a result of which the magnet rotor 2 continues to rotate in the reverse direction (namely, in the counterclockwise direction in Fig. 6). Thereafter, steps S11 through S14 are repeated to allow the magnet rotor 2 to continuously make reverse rotation.

Since the magnetic sensor 9 is attached near the tooth 4a in an angular position advanced from the magnetic sensor 7 in the reverse rotation direction of the magnet rotor 2, it is possible to greatly increase the motor efficiency as compared to the first embodiment where the motor 1 is rotated in the reverse direction using the magnetic sensor 7.

Further, the advance angle of the magnetic sensor 9 may be made to match with the high-speed reverse rotation of the motor 1, and the switch SW3 of the sensor selection circuit 16 may be interrelated with the output changing instructions (e.g., a PWM (pulse width modulation) signal or the like) of the output changing circuit 17 in the control circuit 14. For instance, if the switch SW3 of the sensor selection circuit 16 is configured to be turned on when the instruction for high motor output power are fed to the control circuit 14 or, alternatively, if the output changing circuit 17 in the control circuit 14 is configured to control the motor 1 to generate the high motor output power when the switch SW3 is turned on, it becomes possible to greatly enhance the motor efficiency in case where the rotating speed (rpm) of the motor 1 grows higher together with high motor output power.

With the second embodiment described above, a single-phase brushless DC motor 1 with high efficiency during reverse rotation can be provided using a drive circuit simple in configuration. In addition, it is possible to provide a single-phase brushless DC motor 1 having high efficiency according to the motor output during reverse rotation.

### Third Embodiment

Referring next to Figs. 1 through 3 and Fig. 7, description will be made on a drive circuit for driving a single-phase brushless DC motor 1 in accordance with a third embodiment. In describing the third embodiment, the component parts having the same configuration and operational effect as those of the first embodiment will be designated by like reference characters. The detailed description of the first embodiment made in that regard will be incorporated herein by reference.

The configuration of the third embodiment differs from that of the first embodiment in that the magnetic sensor 10 (the fourth magnetic pole position detector), the sensor selection circuit 16 and the output changing circuit 17 are essential in the third embodiment. Another difference lies in that the selector circuit 12 selects the magnetic sensors under the control of the rotation direction instruction circuit 11 and the sensor selection circuit 16. The magnetic sensor 8 (the second magnetic pole position detector) is selected at the forward rotation start-up time and the magnetic sensor 10 is selected after the switch SW3 of the sensor selection circuit 16 is turned on.

During the forward rotation of the motor 1, the switch SW2 of the rotation direction instruction circuit 11 remains turned on and the voltage of the control power source 18 is applied to the switches SW4 and SW5 through the diodes D7 and D8 to turn on the switches SW4 and SW5. Thus, the output voltages of the magnetic sensors 9 and 7 have the same electric potential as the ground potential 22. In case where the switch SW3 of the sensor selection circuit 16 is turned off, the voltages developed at the both ends of the resistor R4 have the same electric potential as the ground potential 22. The positive voltage inverted by the NOT circuit NT5 is applied to the switch SW7 via the diode D12 to turn on the switch SW7. Thus, the output voltage of the magnetic sensor 10 has the same electric potential as the ground potential 22. As a result, only the output of the magnetic sensor 8 is fed to the control circuit 14 via the diode D2. The forward rotation made at this time is performed by repeating steps S2' through S5' as shown in Fig. 4 and set forth earlier in connection with the first embodiment.

If the switch SW3 of the sensor selection circuit 16 is turned on, the voltage of the control power source 18 is applied to the switch SW6 through the diode D11 to turn on the switch SW6. Thus, the output power of the magnetic sensor 8 has the same electric potential as the ground potential 22. In addition, the voltage of the control power source 18 is inverted by the NOT circuit NT5, the output of which has the same electric potential as the ground potential 22. Likewise, the output voltage of the diode D12 has the same electric potential as the ground potential 22. Thus, the switch SW7 is turned off so that only the output of the magnetic sensor 10 can be fed to the control circuit 14 through the diode D1.

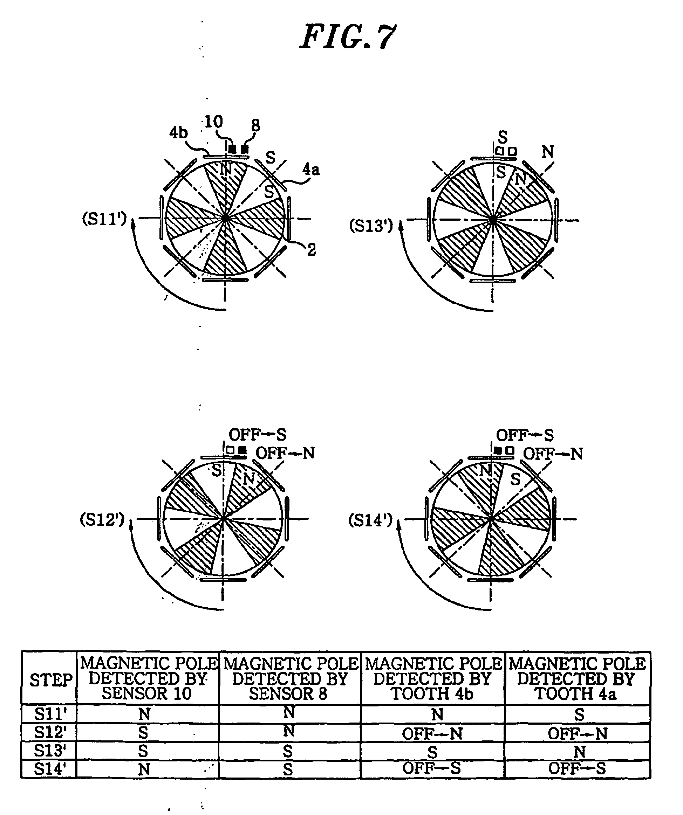

At step S11' shown in Fig. 7, the magnetic sensor 10 detects that the facing magnetic pole of the magnet rotor 2 is an N-pole. Responsive to a signal generated from the magnetic sensor 10 and the forward rotation instruction signal from the rotation direction instruction circuit 11, the control circuit 14 turns on, e.g., the FETs 23a and 24b to magnetize the teeth 4a and 4b so that an electric current can flow through the motor coil 6 in such a direction as to make the teeth 4b the N-pole and the teeth 4a the S-pole. Then, a repulsive force is generated between the teeth 4a and 4b and the magnet rotor 2 to apply torque to the magnet rotor 2, as a result of which the magnet rotor 2 begins to rotate in the forward direction (namely, in the clockwise direction in Fig. 7).

At the subsequent step S12', the magnetic sensor 10 detects that the facing magnetic pole of the magnet rotor 2 has been changed to an S-pole. Responsive to a signal generated from the magnetic sensor 10, the control circuit 14 turns off the FETs 23a and 24b and ceases to supply an electric current to the motor coil 6, thereby stopping magnetizing the teeth 4a and 4b. Nevertheless, the magnet rotor 2 continues to make forward rotation by the inertial force thereof and the attractive force generated between the teeth 4a and 4b and the magnet rotor 2 under the influence of reluctance. At the time when the magnetic centers of the magnet rotor 2 coincide with the centers of the teeth 4a and 4b, the FETs 23b and 24a are fully turned on by the control circuit 14 to magnetize the teeth 4a and 4b so that an electric current can flow through the motor coil 6 in such a direction as to make the teeth 4b the S-pole and the teeth 4a the N-pole. Then, a repulsive force is generated between the teeth 4a and 4b and the magnet rotor 2 to apply torque to the magnet rotor 2, as a result of which the magnet rotor 2 continues to rotate in the forward direction (namely, in the clockwise direction in Fig. 7).

In the next step S13', the magnetic sensor 10 detects the fact that the facing magnetic pole of the magnet rotor 2 is an S-pole. Responsive to a signal generated from the magnetic sensor 10, the control circuit 14 turns on the FETs 23b and 24a to magnetize the teeth 4a and 4b so that an electric current can flow through the motor coil 6 in such a direction as to make the teeth 4b the S-pole and the teeth 4a the N-pole. Then, a repulsive force is generated between the teeth 4a and 4b and the magnet rotor 2 to apply torque to the magnet rotor 2, as a result of which the magnet rotor 2 continues to rotate in the forward direction (namely, in the clockwise direction in Fig. 7).

In the next step S14', the magnetic sensor 10 detects that the facing magnetic pole of the magnet rotor 2 has been changed to an N-pole. Responsive to a signal generated from the magnetic sensor 10, the control circuit 14 turns off the FETs 23b and 24a and ceases to supply an electric current to the motor coil 6, thereby stopping magnetizing the teeth 4a and 4b. Nevertheless, the magnet rotor 2 continues to make forward rotation by the inertial force thereof and the attractive force generated between the teeth 4a and 4b and the magnet rotor 2 under the influence of reluctance. At the time when the magnetic centers of the magnet rotor 2 coincide with the centers of the teeth 4a and 4b, the FETs 23a and 24b are fully turned on by the control circuit 14 to magnetize the teeth 4a and 4b so that an electric current can flow through the motor coil 6 in such a direction as to make the teeth 4b the N-pole and the teeth 4a the S-pole. Then, a repulsive force is generated between the teeth 4a and 4b and the magnet rotor 2 to apply torque to the magnet rotor 2, as a result of which the magnet rotor 2 continues to rotate in the forward direction (namely, in the clockwise direction in Fig. 7). Thereafter, steps S11' through S14' are repeated to allow the magnet rotor 2 to continuously make forward rotation.

Further, the advance angle of the magnetic sensor 10 may be made to with the high-speed forward rotation of the motor 1, and the switch SW3 of the sensor selection circuit 16 may be interrelated with the output changing instructions (e.g., a PWM (pulse width modulation) signal or the like) of the output changing circuit 17 in the control circuit 14. For instance, if the switch SW3 of the sensor selection circuit 16 is configured to be turned on when the instruction for high motor output power are fed to the control circuit 14, or, alternatively, if the output changing circuit 17 in the control circuit 14 is configured to control the motor 1 to generate the high motor output power when the switch SW3 is turned on it becomes possible to greatly enhance the motor efficiency in case where the rotation speed (rpm) of the motor 1 grows higher together with high motor output power.

With the third embodiment described above, a single-phase brushless DC motor 1 with high efficiency according to the motor output during forward rotation can be provided using a drive circuit simple in configuration.

Although the magnetic sensor 9 or 10 for exclusive use in high speed rotation is selected with respect to the switch SW3 of the sensor selection circuit 16, the motor efficiency can be optimized depending on the different motor output power by increasing the number of switches and the number of magnetic sensors corresponding thereto.

While certain preferred embodiments have been described hereinabove, the present invention is not limited thereto. For example, although the drive circuit for driving a single-phase brushless DC motor 1 in accordance with the preferred embodiments employs FETs as the switching elements of the switching circuit 13, it is equally possible to realize a simple circuit configuration by using NPN-type or PNP-type bipolar transistors or IGBTs.

Furthermore, the switches employed in the foregoing embodiments may be formed of transistors, FETs, relays or the like.

Although the timer used in the foregoing embodiments is formed of a time constant circuit including a capacitor and a resistor, it may be possible to realize the timer by using the instructions issued from a dedicated timer IC or a microcomputer.

## Claims

1. A motor drive circuit for driving a single-phase brushless DC motor (1) including a rotatably supported magnet rotor (2) having magnetic poles, a stator core (3) provided with slots (5) and teeth (4a, 4b), the teeth (4a, 4b) being arranged to face the magnet rotor (2), and a motor coil (6) held in the slots (5), comprising:
a plurality of the magnetic pole position detectors (7, 8, 9, 10) for outputting detection signals indicative of magnetic pole positions of the magnet rotor (2);
a rotation direction instruction circuit (11) for issuing an instruct of a rotation direction of the magnet rotor (2);
a selector circuit (12) for, based on the instruction from the rotation direction instruction circuit (11), selectively outputting the detection signals of the magnetic pole position detectors (7, 8, 9, 10);
a switching circuit (13) for driving the motor coil (6); and
a control circuit (14) for, based on the selectively outputted detection signals from the selector circuit (12), controlling the switching circuit (13) to thereby control a direction and magnitude of current flowing through the motor coil (6),
**characterized in that** the teeth (4a, 4b) include a first tooth (4a) and a second tooth (4b) adjacent to the first tooth (4a), the second tooth (4b) being arranged to have a preset advance angle relative to a position of the first tooth (4a) in a forward rotation direction of the motor (1), and the magnetic pole position detectors (7, 8, 9, 10) include a first to a fourth magnetic pole position detector (7, 8, 9, 10), the first to the fourth magnetic pole position detector (7, 8, 9, 10) being arranged between the first tooth (4a) and the second tooth (4b);
the first magnetic pole position detector (7) is arranged at a medial position between the first tooth (4a) and the second tooth (4b) within a predetermined range around an advance angle of about zero and the second magnetic pole position detector (8) is arranged in a slot on a side of the second tooth to have a predetermined advance angle relative to the first magnetic pole position detector (7) in the forward rotation direction of the magnet rotor (2);
the third magnetic pole position detector (9) is arranged in a slot on a side of the first tooth (4a) to have an advance angle relative to the first magnetic pole position detector (7) in a reverse rotation direction of the magnet rotor (2);
the fourth magnetic pole position detector (10) is arranged in the slot on the side of the second tooth (4b) to have an advance angle relative to the second magnetic pole position detector (8) in a forward rotation direction of the magnet rotor (2),
wherein, at a forward rotation start-up time when the rotation direction instruction circuit (11) instructs forward rotation, the selector circuit (12) selects and outputs a detection signal of the second magnetic pole position detector (8), and the control circuit (14) causes the magnet rotor (2) to start up by controlling the switching circuit (13) in response to the detection signal outputted from the selector circuit (12) such that an electric current flows through the motor coil (6) in such a direction as to allow the teeth (4a, 4b) to exert a repulsive force against facing magnetic poles of the magnet rotor (2),
wherein, at a reverse rotation start-up time when the rotation direction instruction circuit (11) instructs reverse rotation, the selector circuit (12) selects and outputs a detection signal of the first magnetic pole position detector (7), and the control circuit (14) causes the magnet rotor (2) to start up by controlling the switching circuit (13) in response to the detection signal of the first magnetic pole position detector (7) outputted from the selector circuit (12) such that an electric current flows through the motor coil (6) in such a direction as to allow the teeth (4a, 4b) to exert an attractive force against the facing magnetic poles of the magnet rotor (2), and
wherein each of the teeth has a generally T-shape asymmetrical in a left-and-right-direction when seen in an axial direction of the motor (1).

2. The single-phase brushless DC motor drive circuit of claim 1, further comprising a timer (15), for outputting a signal after a specified time period has lapsed after the motor (1) starts up,
wherein the selector circuit (12) selects one of the plurality of magnetic pole position detectors (7, 8, 9, 10) in response to the instruction issued from the rotation direction instruction circuit (11) and the signal from the timer (15), and the selector circuit (12) selects and outputs detection signals of the third magnetic pole position detector (9) after the specified time period has lapsed from the reverse rotation start-up time of the magnet rotor (2).

3. The motor drive circuit of claim 1 or 2, further comprising a sensor selection circuit (16) for enabling the selector circuit (12) to select one of the magnetic pole position detectors (7, 8, 9, 10) and an output changing circuit (17) for changing the motor output power,
wherein at a time when the rotation direction instruction circuit (11) instructs the reverse rotation, the selector circuit (12) selects detection signals issued from the first or the third magnetic pole position detector (7, 9) depending on the motor output power.

4. The motor drive circuit of any one of claims 1 to 3, wherein, at a time when the rotation direction instruction circuit (11) instructs the forward rotation, the selector circuit (12) selects detection signal issued from the second or the fourth magnetic pole position detector (8, 10) depending on the motor output power.

5. The single-phase brushless DC motor drive circuit of any one of claims 1 to 4, wherein, during stoppage of the magnet rotor (2), magnetic centers of the magnetic poles of the magnet rotors (2) are shifted to forward rotation side beyond the centers of the teeth (4a, 4b).

## Patentansprüche

1. Motorantriebsschaltung zum Antreiben eines einphasigen bürstenlosen Gleichstrommotors (1), der einen rotierbar gelagerten Magnetrotor (2) umfasst, der magnetische Pole aufweist, einen Statorkern (3), der mit Schlitzen (5) und Zähnen versehen ist (4a, 4b), wobei die Zähne (4a, 4b) angeordnet sind, um dem Magnetrotor (2) gegenüberzuliegen, und eine Motorspule (6), die in den Schlitzen (5) gehalten wird, welche umfasst:
eine Vielzahl der Magnetpolpositionsdetektoren (7, 8, 9, 10) zum Ausgeben von Detektionssignalen, die Magnetpolpositionen des Magnetrotors (2) angeben;
eine Rotationsrichtungsanweisungsschaltung (11) zum Ausgeben einer Anweisung einer Rotationsrichtung des Magnetrotors (2);
eine Auswahlschaltung (12) zum, auf der Grundlage der Anweisung von der Rotationsrichtungsanweisungsschaltung (11), wahlweisen Ausgeben der Detektionssignale der Magnetpolpositionsdetektoren (7, 8, 9, 10);
eine Schaltschaltung (13) zum Antreiben der Motorspule (6); und
eine Steuerschaltung (14) zum, auf der Grundlage der wahlweise ausgegebenen Detektionssignale von der Auswahlschaltung (12), Steuern der Schaltschaltung (13), um **dadurch** eine Richtung und eine Größe von Strom, der durch die Motorspule (6) fließt, zu steuern,
**dadurch gekennzeichnet, dass** die Zähne (4a, 4b) einen ersten Zahn (4a) und einen zweiten Zahn (4b) benachbart zum ersten Zahn (4a) umfassen, wobei der zweite Zahn (4b) ausgelegt ist, um einen vorgegebenen Voreilwinkel relativ zu einer Position des ersten Zahns (4a) in einer Vorwärtsrotationsrichtung des Motors (1) aufzuweisen, und die Magnetpolpositionsdetektoren (7, 8, 9, 10) einen ersten bis vierten Magnetpolpositionsdetektor (7, 8, 9, 10) umfassen, wobei der erste bis vierte Magnetpolpositionsdetektor (7, 8, 9, 10) zwischen dem ersten Zahn (4a) und dem zweiten Zahn (4b) angeordnet sind;
der erste Magnetpolpositionsdetektor (7) an einer Mittelposition zwischen dem ersten Zahn (4a) und dem zweiten Zahn (4b) innerhalb eines vorbestimmten Bereichs um einen Voreilwinkel von ungefähr Null angeordnet ist und der zweite Magnetpolpositionsdetektor (8) in einem Schlitz auf einer Seite des zweiten Zahns angeordnet ist, um einen vorgegebenen Vorwärtswinkel relativ zum ersten Magnetpolpositionsdetektor (7) in der Vorwärtsrotationsrichtung des Magnetrotors (2) aufzuweisen;
der dritte Magnetpolpositionsdetektor (9) in einem Schlitz auf einer Seite des ersten Zahns (4a) angeordnet ist, um einen Voreilwinkel relativ zum ersten Magnetpolpositionsdetektor (7) in einer Rückwärtsrotationsrichtung des Magnetrotors (2) aufzuweisen;
der vierte Magnetpolpositionsdetektor (10) in dem Schlitz auf der Seite des zweiten Zahns (4b) angeordnet ist, um einen Voreilwinkel relativ zum zweiten Magnetpolpositionsdetektor (8) in einer Vorwärtsrotationsrichtung des Magnetrotors (2) aufzuweisen,
wobei, bei einer Vorwärtsrotationsstartzeit, wenn die Rotationsrichtungsanweisungsschaltung (11) eine Vorwärtsrotation anweist, die Auswahlschaltung (12) ein Detektionssignal des zweiten Magnetpolpositionsdetektors (8) auswählt und ausgibt, und die Steuerschaltung (14) den Magnetrotor (2) veranlasst, durch Steuern der Schaltschaltung (13) in Reaktion auf das Detektionssignal, das von der Auswahlschaltung (12) ausgegeben wird, zu starten, so dass ein elektrischer Strom durch die Motorspule (6) in einer derartigen Richtung fließt, um den Zähnen (4a, 4b) zu erlauben, eine Abstoßungskraft gegen gegenüberliegende Magnetpole des Magnetrotors (2) auszuüben,
wobei, bei einer Rückwärtsrotationsstartzeit, wenn die Rotationsrichtungsanweisungsschaltung (11) eine Rückwärtsrotation anweist, die Auswahlschaltung (12) ein Detektionssignal des ersten Magnetpolpositionsdetektors (7) auswählt und ausgibt, und die Steuerschaltung (14) den Magnetrotor (2) veranlasst, durch Steuern der Schaltungsschaltung (13) in Reaktion auf das Detektionssignal des ersten Magnetpolpositionsdetektors (7) zu starten, das von der Auswahlschaltung (12) ausgegeben wird, so dass ein elektrischer Strom durch die Motorspule (6) in einer derartigen Richtung fließt, um den Zähnen (4a, 4b) zu erlauben, eine Abstoßungskraft gegen die gegenüberliegenden Magnetpole des Magnetrotors (2) auszuüben,
wobei jeder der Zähne im Grundsätzlichen eine T-Form aufweist, die asymmetrisch in einer Links- und Rechtsrichtung ist, wenn in einer axialen Richtung des Motors (1) betrachtet.

2. Einphasige bürstenlose Gleichstrommotorantriebsschaltung gemäß Anspruch 1, die ferner einen Zeitgeber (15) umfasst zum Ausgeben eines Signals, nachdem eine bestimmte Zeitdauer verstrichen ist, nachdem der Motor (1) startet,
wobei die Auswahlschaltung (12) einen aus der Vielzahl von Magnetpolpositionsdetektoren (7, 8, 9, 10) in Reaktion auf die Anweisung, die von der Rotationsrichtungsanweisungsschaltung (11) und dem Signal des Zeitgebers (15) ausgegeben wird, auswählt, und die Auswahlschaltung (12) Detektionssignale des dritten Magnetpolpositionsdetektors (9) auswählt und ausgibt, nachdem die festgelegte Zeitdauer von der Rückwärtsrotationsstartzeit des Magnetrotors (2) verstrichen ist.

3. Motorantriebssteuerung gemäß Anspruch 1 oder 2, welche ferner eine Sensorauswahlschaltung (16) umfasst, um der Auswahlschaltung (12) zu ermöglichen, einen der Magnetpolpositionsdetektoren (7, 8, 9, 10) auszuwählen, und eine Ausgangsänderungsschaltung (17) zum Ändern der Motorausgangsleistung,
wobei zu einem Zeitpunkt, wenn die Rotationsrichtungsanweisungsschaltung (11) die Rückwärtsrotation anweist, die Auswahlschaltung (12) Detektionssignale auswählt, die vom ersten oder dritten Magnetpolpositionsdetektor (7, 9) abhängig von der Motorausgangsleistung ausgegeben werden.

4. Motorantriebssteuerung gemäß einem der Ansprüche 1 bis 3, wobei, zu einem Zeitpunkt, wenn die Rotationsrichtungsanweisungsschaltung (11) die Vorwärtsrotation anweist, die Auswahlschaltung (12) ein Detektionssignal auswählt, das vom zweiten oder dem vierten Magnetpolpositionsdetektor (8, 10) abhängig von der Motorausgangsleistung ausgegeben wird.

5. Einphasige bürstenlose Gleichstrommotorantriebsschaltung gemäß einem der Ansprüche 1 bis 4, wobei, während eines Stoppens des Magnetrotors (2) magnetische Zentren der Magnetpole der Magnetrotoren (2) zu einer Vorwärtsrotationsseite jenseits der Zentren der Zähne (4a, 4b) verschoben werden.

## Revendications

1. Circuit de commande de moteur destiné à commander un moteur à courant continu sans balai monophasé (1) qui comprend un rotor à aimants (2) supporté en rotation, qui présente des pôles magnétiques, un noyau de stator (3) doté de fentes (5) et de dents (4a, 4b), les dents (4a, 4b) étant disposées de manière à faire face au rotor à aimants (2), et un bobinage de moteur (6) maintenu dans les fentes (5), comprenant :
✔ une pluralité de détecteurs de position des pôles magnétiques (7, 8, 9, 10) destinés à délivrer en sortie des signaux de détection indicatifs des positions des pôles magnétiques du rotor à aimants (2) ;
✔ un circuit d'instruction de direction de rotation (11) destiné à fournir une instruction de direction de rotation du rotor à aimants (2) ;
✔ un circuit de sélection (12) destiné à délivrer en sortie de manière sélective, sur la base de l'instruction en provenance du circuit d'instruction de direction de rotation (11), les signaux de détection des détecteurs de position des pôles magnétiques (7, 8, 9, 10) ;
✔ un circuit de commutation (13) destiné à commander le bobinage de moteur (6) ; et
✔ un circuit de commande (14) destiné à commander, sur la base des signaux de détection délivrés en sortie de manière sélective par le circuit de sélection (12), le circuit de commutation (13) de façon à commander de ce fait la direction et la grandeur du courant qui circule à travers le bobinage de moteur (6) ;
**caractérisé en ce que** les dents (4a, 4b) comprennent une première dent (4a) et une deuxième dent (4b) adjacente à la première dent (4a), la deuxième dent (4b) étant disposée de façon à présenter un angle d'avance préréglé par rapport à la position de la première dent (4a) dans la direction d'une rotation vers l'avant du moteur (1), et les détecteurs de position des pôles magnétiques (7, 8, 9, 10) comprennent quatre détecteurs de position des pôles magnétiques (7, 8, 9, 10), les quatre détecteurs de position des pôles magnétiques (7, 8, 9, 10) étant disposés entre la première dent (4a) et la deuxième dent (4b) ;
✔ le premier détecteur de position des pôles magnétiques (7) est disposé au niveau d'une position médiane entre la première dent (4a) et la deuxième dent (4b) à l'intérieur d'une plage prédéterminée autour d'un angle d'avance approximativement égal à zéro, et le deuxième détecteur de position des pôles magnétiques (8) est disposé dans une fente sur un côté de la deuxième dent de façon à présenter un angle d'avance prédéterminé par rapport au premier détecteur de position des pôles magnétiques (7) dans la direction d'une rotation vers l'avant du rotor à aimants (2) ;
✔ le troisième détecteur de position des pôles magnétiques (9) est disposé dans une fente sur un côté de la première dent (4a) de façon à présenter un angle d'avance par rapport au premier détecteur de position des pôles magnétiques (7) dans la direction d'une rotation inverse du rotor à aimants (2) ;
✔ le quatrième détecteur de position des pôles magnétiques (10) est disposé dans la fente sur le côté de la deuxième dent (4b) de façon à présenter un angle d'avance par rapport au deuxième détecteur de position des pôles magnétiques (8) dans la direction d'une rotation vers l'avant du rotor à aimants (2) ;
dans lequel, au moment du démarrage d'une rotation vers l'avant lorsque le circuit d'instruction de direction de rotation (11) instruit une rotation vers l'avant, le circuit de sélection (12) sélectionne et
délivre en sortie un signal de détection du deuxième détecteur de position des pôles magnétiques (8), et le circuit de commande (14) provoque le démarrage du rotor à aimants (2) en commandant le circuit de commutation (13) en réponse au signal de détection délivré en sortie par le circuit de sélection (12) de telle sorte qu'un courant électrique circule à travers le bobinage de moteur (6) dans une direction qui permet aux dents (4a, 4b) d'exercer une force de répulsion vis-à-vis des pôles magnétiques qui font face du rotor à aimants (2) ;
dans lequel, au moment du démarrage d'une rotation inverse lorsque le circuit d'instruction de direction de rotation (11) instruit une rotation inverse, le circuit de sélection (12) sélectionne et délivre en sortie un signal de détection du premier détecteur de position des pôles magnétiques (7), et le circuit de commande (14) provoque le démarrage du rotor à aimants (2) en commandant le circuit de commutation (13) en réponse au signal de détection du premier détecteur de position des pôles magnétiques (7) délivré en sortie par le circuit de sélection (12) de telle sorte qu'un courant électrique circule à travers le bobinage de moteur (6) dans une direction qui permet aux dents (4a, 4b) d'exercer une force d'attraction vis-à-vis des pôles magnétiques qui font face du rotor à aimants (2) ; et
dans lequel chacune des dents présente en général une forme en T asymétrique dans une direction gauche et droite en regardant dans une direction axiale du moteur (1).

2. Circuit de commande d'un moteur à courant continu sans balai monophasé selon la revendication 1, comprenant en outre un temporisateur (15) destiné à délivrer en sortie un signal après qu'une période de temps spécifiée s'est écoulée après le démarrage du moteur (1), dans lequel le circuit de sélection (12) sélectionne l'un de la pluralité de détecteurs de position des pôles magnétiques (7, 8, 9, 10) en réponse à l'instruction fournie par le circuit d'instruction de direction de rotation (11) et au signal en provenance du temporisateur (15), et le circuit de sélection (12) sélectionne et délivre en sortie les signaux de détection du troisième détecteur de position des pôles magnétiques (9) après que la période de temps spécifiée s'est écoulée à partir de l'instant de démarrage de la rotation inverse du rotor à aimants (2).

3. Circuit de commande de moteur selon la revendication 1 ou la revendication 2, comprenant en outre un circuit de sélection de détecteur (16) destiné à permettre au circuit de sélection (12) de sélectionner l'un des détecteurs de position des pôles magnétiques (7, 8, 9, 10) et un circuit de modification de sortie (17) destiné à modifier la puissance de sortie du moteur ; dans lequel au moment où le circuit d'instruction de direction de rotation (11) instruit la rotation inverse, le circuit de sélection (12) sélectionne les signaux de détection fournis par le premier ou par le troisième détecteur de position des pôles magnétiques (7, 9) en fonction de la puissance de sortie du moteur.

4. Circuit de commande de moteur selon l'une quelconque des revendications 1 à 3, dans lequel au moment où le circuit d'instruction de direction de rotation (11) instruit la rotation vers l'avant, le circuit de sélection (12) sélectionne les signaux de détection fournis par le deuxième ou par le quatrième détecteur de position des pôles magnétiques (8, 10) en fonction de la puissance de sortie du moteur.

5. Circuit de commande d'un moteur à courant continu sans balai monophasé selon l'une quelconque des revendications 1 à 4, dans lequel, au cours de l'arrêt du rotor à aimants (2), les centres magnétiques des pôles magnétiques des rotors à aimants (2) sont décalés du côté de la rotation vers l'avant au-delà des centres des dents (4a, 4b).
